# EUROPEAN PATENT APPLICATION

(11) **EP 4 060 519 A1**
(43) Date of publication of application: **21.09.2022**
(21) Application number: 21020158.8
(22) Date of filing: 18.03.2021
(51) Int. Cl.: G06F 16/35, G06F 16/36

(54) **DATA TRANSFORMATION CONSIDERING DATA INTEGRITY**

(71) Applicant: Prisma Analytics GmbH, 80331 München (DE)
(72) Inventor: Schloer, Frank Otto, 80331 München (DE)
(74) Representative: Reich, Jochen

(57) **Abstract**

The present invention aims at the reconfiguration of storage contents such that configuration data being provided by means of distributed heterogeneous server infrastructures is transferred to a common storage thereby assuring data integrity. Provided data according to the suggested invention can be provided independently of underlying format and structure and can be reorganized in a common database without losing semantics. Moreover, the suggested teachings allow that intermediate steps even enrich the provided information such that even implicit information can be extracted. According to the suggested techniques explicit und even implicit information is transferred and hence no data loss occurs.

## Description

The present invention aims at the reconfiguration of storage contents such that configuration data being provided by means of distributed heterogeneous server infrastructures is transferred to a common storage thereby assuring data integrity. Provided data according to the suggested invention can be provided independently of underlying format and structure and can be reorganized in a common database without losing semantics. Moreover, the suggested teachings allow that intermediate steps even enrich the provided information such that even implicit information can be extracted. According to the suggested techniques explicit und even implicit information is transferred and hence no data loss occurs. Even a further technical advantage is the reduction of storage space as datasets are stored only once even in case of several occurrences. To strengthen this effect the natural language is reduced to machine readable basic ontological terms such that filling words and notions not carrying semantics are discarded. In this way multi-level feature reduction is performed leading to a common storage using efficient data selection without losing semantics. Respective application programming interfaces APIs can be provided with a single point of common access without necessity to adapt to heterogeneous distributed information sources. This also leads to reduced latency and response times for further services. The invention is furthermore directed towards a respectively arranged system along with a computer program product and a computer-readable medium.

EP 1 302 861 B1 shows a computer-implemented method for parsing an input string that includes elements by applying a plurality of rules which describe syntactic properties of the language of the input string, wherein the plurality of rules comprises two types of rules, a first type of rules consisting of immediate dominance rules, which define dominance relations between constituents of the grammar rules, and linear precedence rules, which define an order of grammar constituents. Especially constituency grammars are described.

Dependency and phrase structures and respective dependency grammars and phrase structure grammars are known in the art although they are disclosed in the context of natural language processing techniques and not in the context of database management.

Complex data sets of extensive amount are typically processed using superscalar computers and respective queries are provided to the user by likewise huge amounts of data sets, from which the user has to choose the appropriate information. Typically, the prior art does not provide a solution to the problem that big data has to be understood by the user who typically operates limited hardware resources.

Existing technologies lack a wholistic approach to extracting and modelling technical content out of heterogeneous data sets of large scale, also referred to as big data. Moreover, not only current technical trends need to be identified in data sets but future dynamics are of importance to get an understanding of data development.

Huge amounts of data are available but there is a problem of accessing these amounts of data and extracting semantics. Currently there is no technique that allows the transformation of big data being distributed over heterogeneous networks into machine readable representations that allow fast processing on the one hand and efficient data handling without loss of semantics. What is required is a method that transforms large data sets into semantically enriched data models such that the information can be accessed easily and preferably at real time. Big data can be processed using artificial intelligence and knowledge modelling such data repositories result providing at least the same information as distributed data sources do but can be accessed at little technical effort.

In this way it shall be possible that data complexity can be reduced such that even handheld computers such as smartphones can access big data with the intermediate processing as currently suggested. The transformed data shall be efficiently modelled such that end devices with low hardware capacities can use the modelled data over a low bandwidth channel and represent data over a graphical user interface GUI. Currently this is not possible as large texts, audio information and video information do not reveal their semantics efficiently.

Accordingly it is an object of the present invention to provide a method and a system arrangement which allow the reconfiguration or transformation of data such that heterogeneous data sources can be consolidated without losing semantics. Provided data shall be provided independently of underlying format and structure and shall be reorganized in a common database. Moreover, that underlying data space shall be used efficiently meaning that data storage requirements shall be reduced and no ambiguous information shall be stored. Moreover, it is an object of the present invention to provide a respectively arranged computer program product and a computer-readable medium.

The object is solved by the subject-matter according to claim 1.

Accordingly, a computer implemented method for automated reconfiguration of storage management such that configuration data being provided by means of a distributed heterogeneous server infrastructure is transferred to a common storage thereby assuring data integrity is suggested, comprising the steps of performing data import from the distributed heterogeneous server infrastructure, thereby extracting natural text from the data; applying at least one predefined constituency grammar analysis, at least one predefined dependency grammar analysis and at least one predefined ontology mapping on the extracted natural text for detecting at least nouns, verbs and/ or ontology entities; storing the detected nouns in a property database, storing the detected verbs in a function database and storing the detected ontology entities in an entities database; and consolidating the databases by joining the stored data towards a common storage.

A computer implemented method for automated reconfiguration of storage management is suggested, where data is transferred from a distributed data source such as the internet to a storage. The benefit is that the information is stored in a machine readable fashion without the necessity to store the data as provided by the data sources. In this way all media can be broken down to concepts and extensive amounts can be stored efficiently in a machine readable way. No semantics are lost as several information extraction techniques are suggested.

The configuration data or generally speaking the input data being provided by means of a distributed heterogeneous server infrastructure is transferred to a common storage thereby assuring data integrity as no information is lost. Even in case ambiguous terminology is provided the semantics are extracted and can likewise be stored. The distributed heterogeneous server infrastructure may be the internet or similar hardware structure.

Performing data import from the distributed heterogeneous server infrastructure is performed using an API which may specialize on the respective format or medium. This can be performed using web crawlers or any interface.

Extracting natural text from the data is performed using standard techniques such that processable text is derived. Moreover, applying at least one predefined constituency grammar analysis is suggested as well as applying at least one predefined dependency grammar analysis. In general dependency parsing may be understood as the process of defining the grammatical structure of a sentence by listing each word as a node and displaying links to its dependents. A constituency parsed tree may display the syntactic structure of a sentence using context-free grammar. Unlike dependency parsing which may rely on dependency grammar. The constituency parse tree may be based on grammars. In this type of tree, the sentence can be divided into constituents, meaning, sub-phrases that belong to a specific category in the predefined grammar. Dependency parsing may not make use of phrasal constituents or sub-phrases. Instead, the syntax of the sentence may be expressed in terms of dependencies between words, meaning directed, typed edges between words in a graph. In the present context words are may be represented as nodes in a graph or tree-like structure and relations between words may be modelled as edges.

Ontology mapping may be understood as comprising issues such as the identification of a word in an ontology and extracting the word's context from the ontology. Based on such a context the meaning of the word may be identified and the word can be categorized with the help of the provided context.

The phrase structure grammar was originally introduced by Noam Chomsky and are known in the art although they are introduced in a different context namely plain natural language processing. This also holds true for dependency grammars which are also known in a different context as currently suggested. The present invention makes use of these concepts and uses them in storage organization.

In a further step at least one predefined ontology mapping on the extracted natural text for detecting at least nouns, verbs and/ or ontology entities may be performed such that the identified words and entities may be enriched using at least one ontology. In this way additional semantics are harvested and extracted such that no information gets lost in the transformation process.

For each identified category one specific database is provided such that concepts are not mixed up but each information extraction process holds its own database, preferably on a separate memory such as a cache memory. In this way storing the detected nouns in a property database, storing the detected verbs in a function database and/ or storing the detected ontology entities in an entities database is performed. The databases may be organized in the same way and are in this context named after their content, namely the identified words and entities which are classified.

Once the databases are available consolidating the databases by joining the stored data towards a common storage is performed such that the information originally provided by the heterogeneous data sources is stored in a common data storage and can be used for further processing.

According to an aspect of the present invention storing data and/ or consolidating the databases is performed only once for each dataset along with an optional cardinality of occurrence of the respective dataset thereby reducing required storage space. This provides the advantage that not every occurrence of nouns, verbs and entities is stored but rather once and in case several occurrences are present a number indicating the occurrence may be stored. In this way semantics can be carried and notions still be put in context by their properties and relations without huge data needs.

According to a further aspect of the present invention extracting natural text from the data is performed using natural language processing, speech recognition, image recognition, character recognition, pattern matching and/ or text analysis. This provides the advantage that any data source can be used and audio or video data can be transferred into text as well as image information. In this way the internet can be mined for information and any data source will result in plain text in the sense of natural language.

According to a further aspect of the present invention applying at least one predefined constituency grammar analysis comprises reading out and executing predefined constituency grammar rules and storing the identified constituencies in a graph like structure. This provides the advantage that predefined and already implemented analysis components can be applied, which are provided through an API. Constituency parsing can be performed with the a pre-implemented parsing engine, which also attaches Part of Speech PoS tags to each word. The suggested Information Extraction may use the standard SVO pattern NP - VP - NP and develops it in a library of accurate, general and reliable SVO constituency patterns.

According to an aspect of the present invention applying at least one predefined dependency grammar analysis comprises reading out and executing predefined dependency rules for detecting dependencies in natural text and storing the identified dependencies in a graph like structure. This provides the advantage that predefined and already implemented analysis components can be applied, which are provided through an API. For dependency grammar analysis implemented well defined and tested packages can be downloaded and included in the present method.

According to a further aspect of the present invention applying at least one predefined constituency grammar analysis, at least one predefined dependency grammar analysis and at least one predefined ontology mapping comprises extracting subject-verb-object SVO triples. This provides the advantage that the existing information can further be processed for enriching the semantics such that additional meta-information is extracted. SVO triples are detected in constituency trees, the constituency trees being generated as a result of the application of the at least one predefined constituency grammar analysis. In this way a constituency trees or in general a constituency graph results which can be used in further processing steps. Ontologies, in general, can be accessed over a respective API remotely or locally, meaning stored on the executing computer.

According to a further aspect of the present invention parent subject-verb-object triples are detected on the extracted subject-verb-object triples. This provides the advantage that even additional semantics are extracted such that the basic subject-verb-object triples can be further enriched. Hence, it is suggested that parent SVO triples are detected, which are one level above the SVO triples for instance in a tree like structure or taxonomy. Ontology Mapping can be applied on SVO triples such that additional semantics are extracted.

According to an aspect of the present invention ontology mapping is applied on subject-verb-object triples. This provides the advantage that it is possible to classify information obtained from the Information Extraction processes and from parsing engines as well as to disambiguate word sense. In this way the true meaning of the information is extracted and no information being provided by the original data source is lost. Hence, data integrity is fostered.

According to a further aspect of the present invention the detected at least nouns, verbs and/ or ontology entities are only stored in the database in case of a positive word sense disambiguation and are stored in a separate data storage in case word sense disambiguation fails. This provides the advantage that the databases are used for words with clear semantics while further words are not sorted into the databases but are stored for further processing.

According to a further aspect of the present invention word frequencies and word context is analyzed on the content of the separate data storage and in case a word meaning is identified of at least a predefined threshold the disambiguated word is input in the present method performing the data import. This provides the advantage that the separate data storage can be used for disambiguation according to further techniques such as context analysis and occurrence in a specific context and in case the meaning is clear it can be input in the suggested method and the word holding clear semantics can be further analyses using grammars or ontologies for instance.

According to an aspect of the present invention the at least nouns, verbs and/ or ontology entities are respectively stored in a separate storage, wherein respectively one storage is provided for Behavior, Properties and Functions, Passports, associations and/ or Relations. This provides the advantage that for each identified category a separate database is used such that the occurrences of each word can be stored in their own database and hence the databases become manageable in their extent, meaning their amount of data to be stored, and still every detected semantic can be preserved. With the categorization the different processing techniques are considered and every sub-process holds its own database. This is especially of advantage in case these different databases are operated on cache memories, which provide fast response times. However, the consolidation can be performed such that the information is joint together on a persistent memory.

According to a further aspect of the present invention the ontology mapping is used for identifying if a Causality, Groups and Organizations, Persons, Geography, Events, Physical objects, Time references, Science and Technology and/ or Concepts can be detected. This provides the advantage that all extracted information can be classified and for each of the provided category a database can be established. In this way data reduction is performed as each occurrence of an entity is stored once and the inventors found out that this provides the optimal trade-off between storage space and performance of data access.

The object is also solved by a system arrangement for automated reconfiguration of storage management such that configuration data being provided by means of a distributed heterogeneous server infrastructure is transferred to a common storage thereby assuring data integrity, comprising the steps of an interface unit arranged to perform data import from the distributed heterogeneous server infrastructure, thereby extracting natural text from the data; an analysis unit arranged to apply at least one predefined constituency grammar analysis, at least one predefined dependency grammar analysis and at least one predefined ontology mapping on the extracted natural text for extracting subject-verb-object triples in the extracted natural text and for detecting at least nouns, verbs and/ or ontology entities; a further interface unit arranged to store the detected nouns in a property database, store the detected verbs in a function database and store the detected ontology entities in an entities database; and a configuration unit arranged to consolidate the databases by joining the stored data towards a common storage.

The object is also solved by a computer program product comprising instructions to cause the arrangement to execute the steps of the method as well by a computer-readable medium having stored thereon the computer program.

It is of special advantage that the method as suggested above can be executed using structural features of the suggested device and control unit. Accordingly the method teaches steps which are arranged to operate the suggested device. Furthermore, the device comprises structural features allowing the accomplishment of the suggested method. In addition a computer program and a computer program product respectively is suggested comprising instruction which perform the suggested method when executed on a computer or the device according to the present invention. Furthermore, the instructions provide means for implementing the structural features of the claimed device. Accordingly an operable image of the structural features of the device can be created. Likewise an arrangement comprising the structural device features is provided.

Wherever, structural features are provided they can likewise be established virtually thereby creating a virtual instance of physical structures. For instance a device can likewise be emulated. It may be the case that single sub steps are known in the art but the overall procedure still delivers a contribution in its entireness.

Further advantages, features and details of the invention emerge from the following description, in which aspects of the invention are described in detail with reference to the drawings. The features mentioned in the claims and in the description can each be essential to the invention individually or in any combination. The features mentioned above and those detailed here can also be used individually or collectively in any combination. Functionally similar or identical parts or components are in some cases provided with the same reference symbols. The terms "left", "right", "top" and "bottom" used in the description of the exemplary aspects relate to the drawings in an orientation with normally legible figure designation or normally legible reference symbols. The aspects shown and described are not to be understood as conclusive, but are exemplary for explaining the invention. The detailed description is provided for the information of the person skilled in the art; therefore, in the description, known circuits, structures and methods are not shown or explained in detail in order not to complicate the understanding of the present description. The invention will now be described merely by way of illustration with reference to the accompanying figures, which show:
- Figure 1:: a flow chart depicting the method for automated reconfiguration of storage management such that configuration data being provided by means of a distributed heterogeneous server infrastructure is transferred to a common storage thereby assuring data integrity according to an aspect of the present invention;
- Figure 2:: a flow chart depicting the suggested method according to an aspect of the present invention;
- Figure 3:: a flow chart depicting aspects of applying at least one predefined constituency grammar analysis ant at least one predefined dependency grammar according to an aspect of the present invention;
- Figure 4:: a flow diagram depicting aspects of ontology mapping according to an aspect of the present invention; and
- Figure 5:: a further flow chart depicting the method according to an aspect of the present invention.

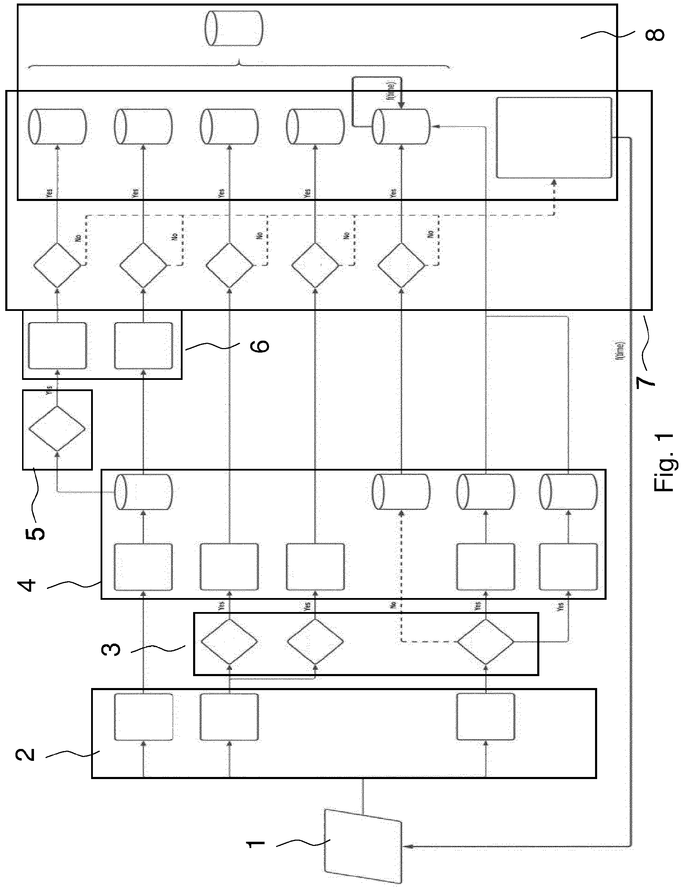

Figure 1 shows the method steps of the suggested computer-implemented, wherein the steps are grouped in phases also referred to as workflow layers. The phases can be described as follows:

| | |
|---|---|
| Workflow layer 1: | Raw data is collected and stored. |
| Workflow layer 2: | Raw data is parsed with constituency and dependency grammars, and mapped with Ontology Mapping processes. |
| Workflow layer 3: | A series of decisions are made: |
| | - Detecting nouns. |
| | - Detecting verbs. |
| | - Detecting ontology mappings to Prisma categories. |
| Workflow layer 4: | With Information Extraction processes: |
| | - SVO triples are detected in constituency trees. |
| | - Nouns and verbs are detected in dependency graphs. |
| | - Recognized Named Entities (proper nouns) and Recognized Entities (common nouns) are mapped to Prisma categories. |
| Workflow layer 5: | A decision is made: |
| | - Parent SVO triples are detected. |
| Workflow layer 6: | Ontology Mapping is applied on SVO triples. |
| Workflow layer 7: | A decision is made: Disambiguation of verbs and nouns. |
| | - If positive, the information is sent to Prisma databases Events, Behavior, Functions [verb based] and Properties, Prisma Entities [noun based] . |
| | - If negative, the information is sent to Linguistic Statistics, which calculates correlations of word frequencies and word context to detect probabilities of meaning. |
| Workflow layer 8: | Prisma databases are mapped to Passports/ data sets |

A function of time f(time) is applied on the whole model from the Linguistic Statistics to the raw date, and on the Prisma Entities, as the processes are reflexive and self-adjusting. Prisma Technology is a general ontology of knowledge that organizes information in nine categories Causality, Groups and Organizations, Persons, Geography, Events, Physical, objects, Time references, Science and Technology, Concepts. Each of them may be described by five dimensions: Behavior, Properties and Functions, Passports, Associations/Relations, Instances. In general Prisma and C+8 both refer to the present invention.

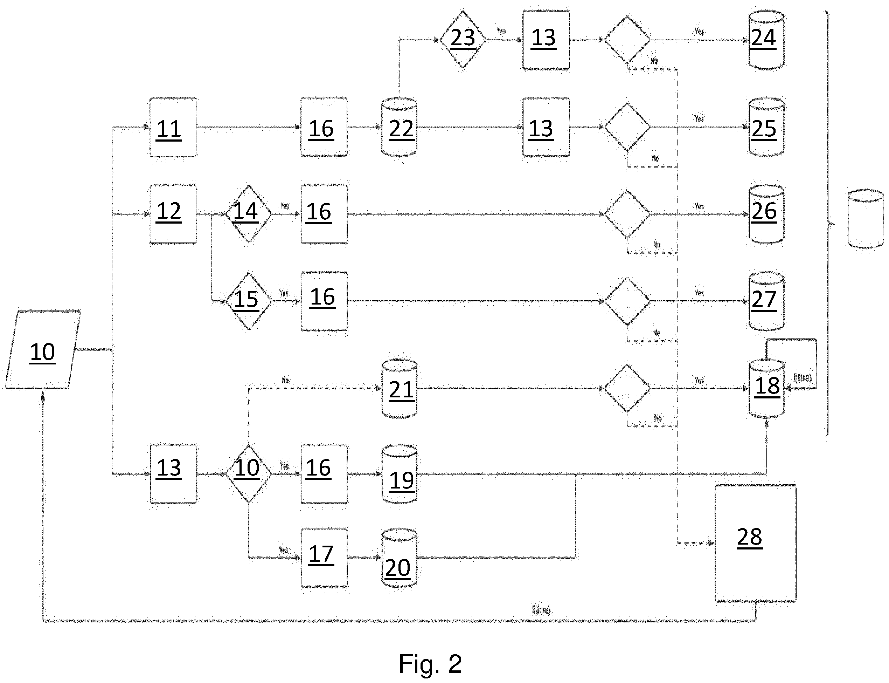

Figure 2 shows the method for automated reconfiguration of storage management in more detail. In case the control flow branches at a decision point the dashed line means control flow upon a negative decision "no" and the normal line or arrow refers to a positive decision "yes".

In the present figure there is shown the data import 10 on the left side leading to constituency parsing 11 and dependency parsing 12 as well as ontology mapping 13. The constituency parsing 11 direct leads to Information Extraction 16 while dependency parsing 12 as well as ontology mapping 13 require sub-steps such as analysis if the handled item, namely a word or a generated tree-like structure comprises or represents a noun 14 or a verb 15. In case ontology mapping 13 is performed the question arises if the defined entities can be mapped to Prisma or more generally speaking if the identified word is part of a predefined ontology such that this entity can be classified and afterwards stored as a Prisma entity 18 or more generally speaking be stored in a respective database to be consolidated afterwards. Recognized Named Entities are detected 17 and results of the Prisma mapping are stored in a respective Recognized Entities database 19 and a respective Recognized Named Entities database 20. Unrecognized entities are also stored and disambiguated.

After Information Extraction 16 the items may be passed on the a causation database 22 as indicated by the control flow. Afterwards parent causations may be detected 23. On these concepts ontology mapping 13 is performed . Any identified concept such as noun, verb, ontology entity resulting from ontology mapping 13 is disambiguated. This is performed in the decision points depicted as the diamonds not holding reference signs. Afterwards they are either stored in the Linguistic Statistic database 28 and delivered to import 10 in case they are ambiguous and cannot disambiguated or they are stored according to a database as identified by the previous steps. The databases can be implemented as an Events database 24, Behavior database 25, Properties database 26, Functions database 27, Entities database 18, especially Prisma entities database. Finally they are consolidated in the storage on the right.

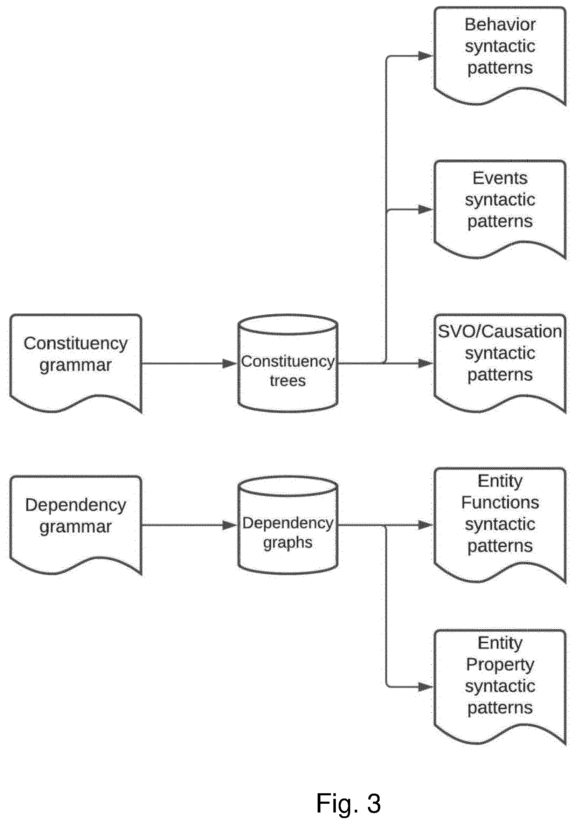

Figure 3 shows the application of the suggested grammars such that respectively one tree-like structure results. On the right side of the present figure the output of such sub-steps is demonstrated, namely Behavior, Events, Causations, Entity Functions and Entity Properties categorized words. Hence, the semantics of the input are enriched and the results can be matched on the categories for further storage in respectively one database per category and/ or dimension. Information Extraction processes use constituency and dependency grammars to extract SVO triples and to detect nouns and verbs and their syntactic descriptives.

### SVO triples/Causations

Constituency parsing is performed with the Stanford CoreNLP parsing engine, which also attaches PoS tags to each word. Prisma Information Extraction uses the standard SVO pattern NP - VP - NP and develops it in a library of accurate, general and reliable SVO constituency patterns.

### Example

In the following a non-limiting example is provided demonstrating the suggested combination of techniques. The input may be an example sentence as follows, which is handled in accordance with the suggested teachings:
"In this case, it is the combination of pandemic life and work styles, the accelerating shift to everything digital and the company's internal efforts to turn business around that have the stock looking so attractive."
(ROOT (S (PP (IN In) (NP (DT this) (NN case))) (, ,) (S (NP (PRP it)) (VP (VBZ is) (NP (NP (DT the) (NN combination)) (PP (IN of) (NP (NP (ADVP (RB pandemic)) (NP (NN life)) (CC and) (NP (NN work) (HYPH -) (NNS styles))) (, ,) (NP (NP (DT the) (VBG accelerating) (NN shift)) (PP (IN to) (NP (NN everything) (JJ digital))))))))) (, ,) (CC and) (S (NP (NP (DT the) (NN company) (POS's)) (JJ internal) (NNS efforts) (S (VP (TO to) (VP (VB turn) (NP (NN business)) (PP (IN around) (NP (DT that))))))) (VP (VBP have) (NP (NP (DT the) (NN stock)) (VP (VBG looking) (ADJP (RB so) (JJ attractive)))))) (..)))
Causation: company's efforts have the stock looking so attractive
GUID: 8c01 b6e7-eb61 -467a-a199-19ced7bad11d
Subject: company's efforts
Verb: have

### VerbMeta:

VerbTense: VBP -> Present
Object: the stock looking so attractive
ParentGUID: 00000000-0000-0000-0000-000000000000

### Events

Information Extraction uses constituency trees to extract [actor - action - acted on - time reference] into Events.

### Behavior

Information Extraction uses constituency trees to extract [actor - action - acted on] into Behavior.

### Properties and Functions

Dependency parsing is performed with the Stanford CoreNLP parsing engine, which also attaches PoS tags to each word. Information Extraction uses dependency triples in the format relation (governor, dependent) to detect properties of Prisma entities [object - property] based on the noun in the relation, and of functions of Prisma entities [act - actor - acted on] based on the verb in the relation. These are collected in a library of accurate, general and reliable Properties and Functions patterns.

### Example:

-> combination/NN (root) -> case/NN (obl:in) -> In/IN (case) -> this/DT (det) -> ,/, (punct) -> it/PRP (nsubj) -> is/VBZ (cop) -> the/DT (det) -> life/NN (nmod:of) -> of/IN (case) -> pandemically/RB (advmod) -> styles/NNS (conj:and) -> and/CC (cc) -> work/NN (compound) -> -/HYPH (punct) -> ,/, (punct) -> shift/NN (appos) -> the/DT (det) -> accelerating/VBG (amod) -> everything/NN (nmod:to) -> to/IN (case) -> digital/JJ (amod) -> styles/NNS (nmod:of) -> ,/, (punct) -> have/VBP (conj:and) -> and/CC (cc) -> efforts/NNS (nsubj) -> company/NN (nmod:poss) -> the/DT (det) -> 's/POS (case) -> internal/JJ (amod) -> turn/VB (acl:to) -> to/TO (mark) -> business/NN (obj) -> that/DT (obl:around) -> around/IN (case) -> stock/NN (obj) -> the/DT (det) -> looking/VBG (acl) -> attractive/JJ (xcomp) -> so/RB (advmod) -> ./. (punct)

### Properties:

Object: shift, Attribute: accelerating, Pattern Used: amod(NN-VBG)
Object: everything, Attribute: digital, Pattern Used: amod(NN-JJ)

### Functions:

Act: turn, Actor: , ActedOn: business
Act: looking, Actor: stock, ActedOn:

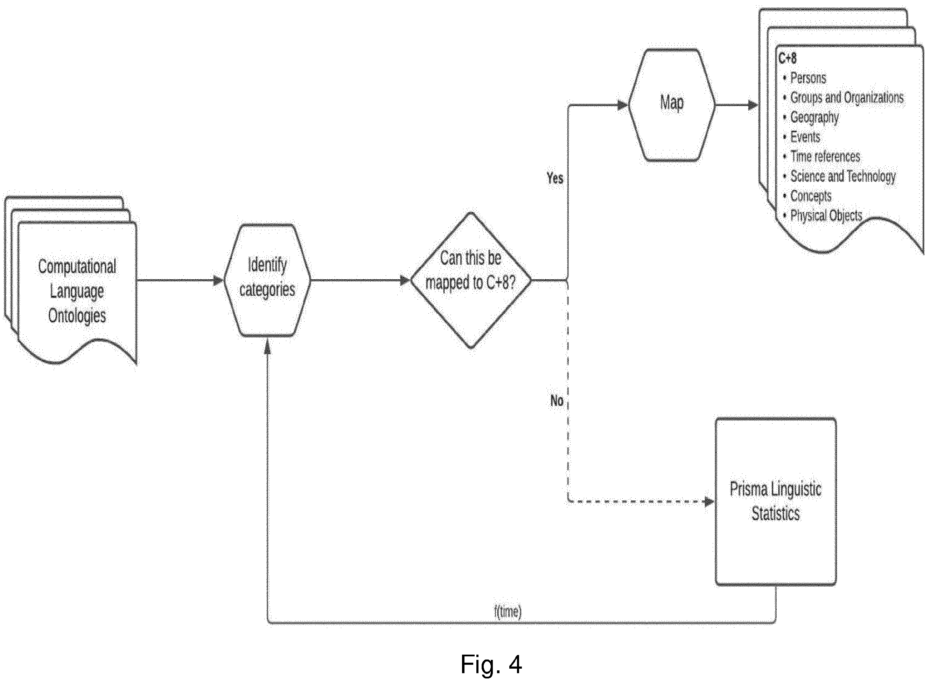

Figure 4 shows the process of Ontology Mapping and especially how the input can be categorized, meaning assigned to Prisma categories and/ or dimensions.

Ontology Mapping may be implemented using a library of standardized linguistic computational resources correlated with the Prisma ontology. See the present figure. Standardized categories are mapped to Prisma in order to:
- classify information obtained from Information Extraction processes and from parsing engines.
- disambiguate word sense.

The process is self-adjusting in a feedback loop across time. Entities that can not be classified or disambiguated in the first workflow are sent to the Linguistic Statistics engine, which calculates correlations of word frequencies and word context to detect probabilities of meaning. Once these are reached, the mapping process starts all over again. The result is an auto-generation of ontologies within the Prisma Technology, based on seed ontologies.

### Example:

### Entities

Entity: in this, Entity Type: Concept, Entity Type Meta:possession
Entity: effort, Entity Type: ScienceAndTechnology, Entity Type Meta:act

### Behavior

Act: to turn, Actor: company's efforts , ActedOn: business around that, VerbDomains: change
Act: have, Actor: company's efforts , ActedOn: the stock looking so attractive, VerbDomains: change

### Functions

Act: turn, Actor: , ActedOn: business, VerbDomains: change
Act: looking, Actor: stock, ActedOn: , VerbDomains: perception

In the description set forth herein the invention is described by specific aspects, which can be combined in the described way, where some aspects are optional and merely for demonstration purposes. An aspect of the invention is named Prisma, which refers to the suggested subject-matter. Circumplex and Prisma refer to the present invention implying the principle of causality and 8 kinds of object entities:
1. Causality: The object Causality is understood as the relation between an event and a second event, where the second event is understood to be a consequence of the first. Causality is also the relation between a set of factors (properties, behaviors, functions) and other such phenomena. Causality is a prime feature of Prisma and cannot be substituted.
2. Event: An event is the fundamental entity of observed physical reality represented by a point designated by three coordinates - an action, a place, and a time within the space-time continuum.
3. Concept: A concept is an abstract or generic idea which becomes defined through specific instances and generalized through associating multiple instances.
4. Group: A group is zero or more elements forming a complete unit in a composition, or a number of individuals, objects, or abstract units which are either assembled together or have some internal unifying relationship, including being regarded by an external observer as a unit through a defined concept. The membership of any object to become belong to a Group is often determinate by the organizing concept of the group, for example a theme of membership or a commercial organization such as a Corporation or Association.
5. Person: A person as a cardinal object in Prisma is a real human individual, but also includes the projection of a technological element designed to resemble a human with all its functions and properties, for as long as it stays undetected as technology. Imaginary persons are either Concepts (if virtual) or simply objects (if physical).
6. Geography: A geographical object constitutes the description, distribution, or interaction of any location, whether it be definite, abstract, or metaphorical.
7. Time: As a cardinal object, time is the measured or measurable moment or period during which an action, process, or condition begins, exists, continues, or ends; a nonspatial continuum that is measured in terms of events that succeed one another from past through present to future. Time can be referred to as either a hard and precise measurement by using a clock, for example, or as a soft measurement through a general description of one or more time periods.
8. Physical Object/Thing: A physical object is a material thing, real or perceived through abstract understanding, that includes all living things except what is defined above as a "Person".
9. Technology: A technology object is any object, its system, or behavior which came into existence willfully and purposefully through the application of individual or systemic intelligence by a natural or artificial agent with the specific goal of providing a solution to a problem or increasing the efficiency of a particular process.

Any object of the real world can, and often is defined as more than one Cardinal Object and is dependent on the definitions within a given instance of the Prisma recorded universe. These 9 objects (Causality + 8 Elements) are recorded in passports (one passport for each unique object) in combination with instances, properties, functions, behaviors, associations, and event timelines which are relational databases that describe how objects/entities live inside the Prisma environment. (A unique object would be, for example, Abraham Lincoln's first dining room table, and its passport would contain all available information about that particular table - when it was acquired, where it came from, the locations it was placed in, etc.) A knowledge object is defined by its instances, properties, functions, behaviors, and associations.

An instance is a concrete occurrence of any object/entity in our system. Each instance emphasizes the distinct identity of the object/entity in the context where it occurred. Each instance is assigned its own IPv6 number and is recorded in the global register.

A property of an object in the suggested system is an intrinsic or circumstantial characteristic of said object/entity. Each property describes the object/entity, so as to make it definable and identifiable across any environment. The combined set of properties describe the features, in how the object was observed by all observers, which may be different from how an object actually is. Typically, one should assume, that the more independently recorded observations exist, the more accurate the description of the object over time generally should become. This also allows for implementation of a generalized scoring system of observer, and the observed: Firstly, the more independently observed features of the same type or value are recorded from an increasing number of different observers increase the probability of objective truth about the underlying object, and secondly, the more observers observe properties or values within the highest density of plotting of all observations, the more an observer can be trusted, that its observations are near the truth; especially for all such cases, where only a limited amount of observational data exists.

Functions are roles or purposes that have been observed in relation to an object by the Prisma system. Functions are what the underlying object/entity does, or how it is changed or what effect to other objects it produces in the context where it was observed or in which the function is produced.

Behavior describes how the object/entity acts in its original environment and how its actions change when the environment changes. For example, when a new behavior is detected, such as "kill," it gets an IPv6 number, and whenever "kill" is detected again, all the information is recorded under the original IPv6 number. When the system is asked when has the behavior "kill" been associated with some Person (x), for instance, it will return all the data it has for this combination. (This is the way the brain functions, and there is presently outside of Prisma no other system that can reproduce such results instantly and efficiently).

By using observations (new data) to link an object/entity to other objects/entities through shared descriptors (behavior, functions, properties, instances and time), the Prisma system acquires more descriptive and more in-depth knowledge about both the entities and the world generally. By using the structures of time relations in Prisma, the system and its users gain understanding of the sequential occurrence of observed reality. This is critical to making accurate predictions.

The information web ties all the pieces together. In this example there is a single instance (a news article, a book, a scientific journal, a radio/television broadcast, etc.) together with all the elements contained in that instance: one or more of each cardinal object, each with its own passport. If Prisma recognizes an object as having been previously mentioned, the passport for that object is retrieved. All the Prisma objects are always related to each other by instance, but they can also become related through vertical object views cross multiple instances. For example, an object 'Person' observed at the same object 'Geography' a conference room, at the same object 'time' sharing the same object 'Concept' annual board-meeting, and object 'Group' Acme Corporation, become related with another person, sharing the same other objects, but retrieved from different instances.

An additional aspect of the nine cardinal objects is the fact that each can be viewed vertically. This means that you can take any object and see all the data that is available about that particular object - its associations, the events it took part it, where it was, when it was there, what it did or what was done to it, and so on. This is called the vertical multi-world representation.

In order to create bias-free self-predictive smart data, there are 11 steps that must be followed. The first 6 steps are the constructive process - when building the sandbox, we first construct the associative data model based on the real world. The next 5 steps are the observational process, which are necessary in order to understand what is happening on all possible levels. All these steps contribute to creating real-time predictions from continuously incoming data, predictions that can be viewed using our specially designed tools.

### I. Import data

First, we import raw, unstructured data files (video, images, text, etc.) also known as instance. Metadata is created and time-stamped, instance records are generated, and an IPv6 number is assigned to the newly created objects. In this way we record everything we can hear, see, read, touch, sense, or otherwise observe in the real world in any possible but reliable way (by humans or machines) and store it in a raw data depository.

Currently Prisma Analytics collects data from over 42,300 major aggregation sources. Some examples of these sources are Reuters News, AP, DPA, CNN, FOX, Google, Science and Technology, News, The American Scientist, Financial Times, New York Stock Exchange, IMDB, Library of Congress, RT, China News, Twitter, Global Research, and over 42,000 more.

### II. Entity parsing

The next step is entity parsing. The Prisma system parses the raw data into triples with a subject-verb-object format. This step retrieves initial information elements and structures from raw data. The specific entities or objects which become preserved from these information elements in the Prisma System are Events, Persons, Groups, Geography, Concepts, Objects of Time, physical Objects and Objects of Technology. Each extracted object is subject to disambiguation by the system using natural language processing in order to ensure best possible identification. Extracting these objects from the raw data later allows us to reconstruct a chronological time-line of their appearance using each recorded instance.

Once parsed, each unique cardinal entity receives a passport. Whenever a new entity is parsed, the global object passport register is checked in order to see if that entity already exists and has a passport; if it does, the passport is updated with the data of the new instance together with the Instance record, its IPv6 and date/time stamps; if it doesn't, a new passport is created with an assigned IPv6 and is recorded in the global passport register.

### III. Causality parsing

Step three is causality object parsing. Causality in Prisma is defined as the relation between an event and a second event, where the second event is understood to be a consequence of the first. In common logic, causality is also the relation between a set of factors and a phenomenon. It is a prime feature of all knowledge and cannot be substituted. Extracting causality from data is the single most important and most rewarding task in the pursuit of Intelligence. In this step, the Prisma system extracts any knowledge object that either fully or partly establishes the existence of cause and effect within the behavior of any Prisma object in any instance of observation. We read causality out of raw data by identifying individual units of causation through Triples (subject, verb, object), which are connected through association to each other and to the objects identified in step II (which are contained within the causation units).

### IV. Property, function, and behavior parsing

Objects typically have properties, and they behave or function in some observable way. Each property, function and behavior are parsed from raw data, and recorded; through them we are able to understand how the cardinal objects have been observed, how they behave, how they function, and what their place and transformative influence is in the underlying event timeline.

Each time, a cardinal Prisma object appears in any instance with respect to an observation of a property or behavior, a new record set is created inside the object database, to preserve, who or what perceived what, when and in what instance. This allows over time, to capture even contradictory observations, and therefore a more unbiased and more objective picture begins to emerge.

### V. Associative network creation

The associative network is created by linking every object to its native instance, to other objects found in the same instance, to the relevant time stamps, to all its respective causations, properties, function, and behavior records through pairs of IPv6 numbers and corresponding time stamps. This create a mesh of network-clusters which recreate the memberships, time-lines, and sub-time-lines of every instance, and every event timeline within.

### VI. Visualization of data through special tools

All recorded instances and extracted Prisma objects can be viewed through our quantitative and qualitative tools to establish fully quality-quantified objects. These objects are measured continually, creating the multi-cube matrix which we will explain shortly in this document.

The Technical Energy Diagram, (hereinafter the circumplex) offers a method of viewing and measuring Prisma data through natural language processing, while our Indicators (shown further below) offers quantitative measurements of occurrence or specific behaviors. The numeric output from both these quantitative measurements is then inserted into the Cube Library, where they feed the statistical models to extract signal information.

The Diagram may illustrate the trends of collective moods on a circumplex, combining sectional measures with longitudinal measures displayed in a panel format. This data processing, visualization, and analysis tool displays polar data combined with trigonometric functions on a geometric space, thus allowing for more than two measurements on the same observation at a single point in time. Using radii, theta, and a circumference, the diagram is a geometric space on which data about collective moods, affects, and emotions is plotted, thus creating a dynamic and complex image of the way an object is perceived by collectives and to what intensity. It goes without saying, that this method of visualization allows one to discover trends and shifts in social energies using very large data sets. The circumplex uses a glossary-based approach: computers run a Technical Energy Glossary and adjacent specialized Glossaries against empirical data, identifying, counting, and extracting glossary entries. These entries are then plotted on the geometrical space.

The Indicators tool is a simple counting mechanism combined with the Prisma query fields (shown on the page above, and to the left), making this simple function a formidable analysis tool. The user introduces what element he wishes to track over what period of time and then refines the search with additional elements such as behaviors or associations, etc. The output is an accurate on-point time series that shows the evolution of the element over the selected time period. This evolution is simply the number of times that element is found in the Prisma data pool over a specific time period in combination with the additional filters the user has specified. For example, a user could specify an <Event>, occurring in all <Geographies>, where conferences are hosted, which have as <Concept> subject Climate Change, and a particular <Group>, which appears as <conference sponsor> (a function/behavior sub-set).

What both these tools have in common, besides the Prisma data behind them, is a highly intuitive query field in which the user introduces the elements they wish to observe over whatever period of time it may be required. This also allows researchers to carry out extraordinarily complex queries, which can be done inside Prisma in seconds and which return a volume measurement whereby each occurrence can reveal the underlying data for details.

### VII. Statistical calculations

The upper layers of Prisma use fully automated statistics engines, which are applied continuously onto all system-generated numerical information. Its purpose is to detect notable asymmetric shifts in its parallel streams of analysis data. To establish various reference points of 'normal' in the continuous quantitative measurements (time-series), the system uses bell curves. These establish baselines over various time lengths, generating normalization histories. Baselines could be established, for example, over 90 days, 180 days or even over years. This baseline is used as a 'zero point' from which with observed ranges of data fluctuation can be measured. In this way, the system can establish and maintain for comparable objects a generalized definition of 'normal' behaviors within and without expected ranges of variation over some typical lengths of time. By keeping history of change ranges, we can find larger fluctuation trends and correlate them with events and event clusters over various timelines. In this way, we can establish a mesh network of billions of statistical change/time elements, each connected through IPv6 numbers to these dynamic measurements, belonging to a specific object cluster, to determine if it is still functioning within a range of expected 'normal' or has moved away from the 'normal' ranges within the bell curve or histogram, and creates a unusual or asymmetric footprint in the data, however discreet.

### VIII. Extract asymmetric values detected in circumplex data

Once we have established a baseline of "normal" and a mechanism to measure departures from "normal" we use them to create cut-off values for weak signals, similar to those used in asymmetric signal detection, for example. All the asymmetric values and value ranges (asymmetric meaning, in this case, deviating from the expected or "normal" ranges of quantified behavior and properties) are then extracted from the circumplex and analyzed in comparison to the established "normal" range for each object or set of objects. It is important to note that all ranges, whether they be normal or asymmetrical, are subject to evolution according to their contextual conditions (this being one of the principles of Quantum Relations).

The Prisma data model makes possible the generalization of time series, something that has not been done before. And this generalized time series model is what, in turn, makes the Cube possible. The Cube is a set of tools and a strategy that can be used to visualize and understand enormous amounts of data in a concise and understandable form. Below is a brief explanation of how a Data Cube is constructed, with all its general elements combined.

In order to break it down, one can first define the dimensions: P(g) = measurements/ queries of the same type (for example, multiple countries, or cities, or companies, or other such similar observations); q = different qualities (in Prisma, a quality is a piece of qualitative information), which can be any number of things - behaviors, energies, concepts, events, and so on, which become quantified within the analytical process; and t = time (years, seconds, days, whichever is desired to measure the data history). The example below shows combined sets of circumplex data, using as P(g) value Nations, and as q value social measurements within each of these nations.

Queries are run through the Technical Energy Diagram for each country and the resulting data (q here equals the 14 energy layers) is viewed for the desired time period. The quality "hope," for instance, can be compared among any countries desired. The Cube has no predefined size, any of the dimensions can contain theoretically an unlimited number of variables, only limited by the memory and processing power of the computer.

### IX. Extract asymmetric patterns

Using the Cube, we now extract the patterns and signatures of the previously loaded circumplex asymmetric values and value ranges (weak signals) which reoccur within the observed cube data sets. The associative context must be preserved and understood as an integral contextual element part of the pattern itself. The same quality can be compared in the same query (environment) or in different ones at different points in time (in the first option we can look at Germany's GDP over 20 years and compare one year to another, but in the second we can also compare Germany's GDP with France's and Spain's also over 20 years).

### X. Create event overlay

In the next step we create qualified and quantified event overlays for the cube, and coordinate weak signals with pre- during- and post-event statistical data to establish event signatures.

Various Decision Support Tools using inputs from all available data analysis models, such as the circumplex of collective moods, or the Indicators, then calculate a assumed action or event against all obtainable analysis output and places its viability on a vertical axis, along with scores across a horizontal axis of Risk or Impact Potential. The signals that our data models - the circumplex, the cube, the indicators - computed from the complex Prisma network of entities - are, thus, placed in an interpretive context, and can be understood better, as they are oriented towards a specific action.

### XI. Automatically extract predictive patterns

The final step is the automatic extraction of predictive patterns (stochastic signatures and event markers) from real-time data to create probable forward scenarios for all the observed data, reporting, visualizing, and describing unfolding events, trends, and their probable consequences. In other words, we automatically communicate early signals which may indicate asymmetric events to clients via push apps and visualization monitors. In Prisma enabled analysis it is of critical importance to perform quantitative analysis not only between two or three nodes of the system, but the entire system, which is context to the studied problem. Only in this way we can understand and predict its evolution into the future with any reasonable validity. Quantitative analysis of system behavior is in the context of Prisma analysis the application of mathematical models, conceptualized from a robust corpus of environment-behavior-consequence interactions in the experimental analysis of systemic behavior, with the aim to describe and/or predict relations between a dependent variable and all possible levels of an independent variable. Most importantly, the parameters in the models must gain clear mathematical meaning (through generalized built-in thresholds) well beyond the fitting of models to data, to cut off all attempts to introduce operator bias into the analytics process.

Behavioral economics studies the effects of psychological, cognitive, emotional, cultural and social factors on the economic decisions of individuals and institutions and how those decisions vary from those implied by classical theory

Behavioral momentum is in Prisma a continuous method and quantitative analysis of systemic behavior, its probability to change, and is a behavioral concept largely based on physical momentum. It tracks and compares with similar systems the general relations between resistance to change (persistence of behavior) and the rate of reinforcement obtained in a given situation, based either on threats to change or incentives to change. Given continuous observation and tracking of such discovered processes in systems will give opportunities to build over time increasingly accurate probability models, which then become applied as output in analytics visualizations.

In case of Prisma general system analysis, the mathematical tools used have integrated models from economics, zoology, philosophy, and other branches of psychology, especially mathematical psychology of which it is a branch. Quantitative analysis of systemic behavior addresses in the context of Prisma quantitative analysis of systems with human participation the following topics among others: behavioral economics, behavioral momentum, connectionist systems or neural Connectionist systems are artificial neural networks based expert systems where the network generates inferencing rules e.g., fuzzy-multi layer perceptron where linguistic and natural form of inputs are used. In Prisma these tools are used only on very targeted and specific problem types, to maintain maximum transparency in the overall analytics process.

In economic systems analysis of Prisma, hyperbolic discounting is a time-inconsistent model of delay discounting. It is one of the cornerstones of behavioral economics, and in Prisma implemented as automated monitoring function, to gain statistically significant predictability in economic systemic behavior in groups of different demographics and background. The discounted utility approach of this type of analysis states that intertemporal choices are no different from other choices, except that some consequences are delayed and hence must be anticipated and discounted (i.e., re-weighted to take into account the delay). Given two similar rewards, humans generally show a preference for one that arrives sooner rather than later. Humans are said to discount the value of the later reward, by a factor that increases with the length of the delay. This process is traditionally modeled in the form of exponential discounting, a time-consistent model of discounting. Analysis in Prisma data has demonstrated deviations from the constant discount rate assumed in exponential discounting. Hyperbolic discounting is an alternative mathematical model that accounts for these deviations, which derive from composition differences in analyzed groups, such as age, economic status, or ethnic background. According to hyperbolic discounting, valuations fall in general relatively rapidly for earlier delay periods (as in, from now to one week), but then fall more slowly for longer delay periods (for instance, more than a few days). For example, in independent studies on this subject, humans would be indifferent between receiving 15 Euro immediately or 30 Euro after 3 months, 60 Euro after 1 year, or 100 Euro after 3 years. These indifferences reflect annual discount rates that declined from 277% to 139% to 63% as delays got longer. This contrasts with exponential discounting, in which valuation falls by a constant factor per unit delay and the discount rate stays the same. The standard used to reveal a systems' hyperbolic discounting curve is to compare short-term preferences with long-term preferences. Typically, a significant fraction of decisions are made in favor of the lesser amount today, but wait one extra day in a year in order to receive the higher amount instead. Individuals or groups with such preferences are typically classified as "present-biased". The most important consequence of hyperbolic discounting is that it creates temporary preferences for small rewards that occur sooner over larger, later ones. Individuals and groups using hyperbolic discounting reveal a strong tendency to make choices that are inconsistent over time - they make choices today that their future self would prefer not to have made, despite knowing the same information. This dynamic inconsistency happens because hyperbolas distort the relative value of options with a fixed difference in delays in proportion to how far the choice-maker is from those options. By tracking in Prisma continuously these tendencies in various observable groups gives not only insight on their economic behavior patterns, but they translate also into social and political decision making. They are therefore important input factors amongst others, into the matrix of forces and tendencies/choices in social systems.

Foraging under Prisma is a branch of behavioral systems ecology analysis that quantitatively tracks the foraging behavior of observed systems in response to the environment in which the system functions. The observational tools of Prisma are typically applied to economic systems to understand foraging; Systems studied by the automated processes of Prisma are initially a type of optimal model. Foraging technics are applied in terms of optimizing the insight into the payoff from a foraging decision. The payoff for many of these models is the amount of energy system receives per unit time, more specifically, the highest ratio of energetic gain to cost while foraging. Foraging in this way typically predicts that the decisions that maximize energy per unit time and thus deliver the highest payoff will be selected and mostly persist. Key words used to describe foraging behavior include resources, the elements necessary for system survival and sustainability which have a limited supply, adverse environmental conditions, any enemy that consumes a systems resources, and act predatorily, will end the system, wholly or in part, over time, depending on an equation of energy, time, adversarial forces and quantitative evaluation of each. This analysis also accounts for adversarial forces generated as a consequence of the system itself, in much the way, in which a yeast colony will suffocate eventually in its own waste.

In Prisma the matching law is used and continuously tested and adjusted as a quantitative relationship that holds between the relative rates of response and the relative rates of reinforcement in concurrent schedules of reinforcement. For example, if two response alternatives A and B are offered to a system, the ratio of response rates to A and B equals the ratio of reinforcements yielded by each response. This law applies fairly well when systems become exposed to concurrent variable interval schedules detection, neural hysteresis, and reinforcement control. Under Prisma, these tools are automated, and its applications are generalized across the entire statistics layer.

### XII Signal Detection

Signal Detection is a key standard in the Prisma analytics library of statistical tools. It gives means to measure the ability to differentiate between information-bearing patterns (stimulus in living systems, signal in machines) and random patterns that distract from the information (called noise, consisting of background stimuli and random activity of the detection machine and of the nervous system of the operator). There are a number of methods used by Prisma to detect signals, and to determine signal threshold levels. These will, of course, be different for different methods.

Changing the threshold will affect the ability to discern, often exposing how adapted the system is to the task, purpose or goal at which it is aimed. When the detecting system is a human being, or a group of humans, organized by a set of filter factors, characteristics such as experience, expectations, physiological state (e.g., fatigue) and other factors can affect the threshold applied. For instance, a sentry in wartime might be likely to detect fainter stimuli then the same sentry in peacetime due to a lower criterion, however they might also be more likely to treat innocuous stimuli as a threat.

Therefore, all signal detection tasks in Prisma are generalized, alone with the filter definitions of the data selection, to repeat the process of detection continuously and under structures selection conditions.

In Prisma, the process of selecting detection methods and setting thresholds becomes an automated strategy, continuously refined as more data arrive. Prisma can, and does, also devise new detection methods and new ways of refining thresholds. This makes the system evolve naturally. The analytics matrix is adjusted to fit the object data pool. New data are added, data that may become critical to know later, without a user having specifically instructed the analytics layer to collect specific signal for a specific system and condition. By growing a dynamic system signal library, and by tuning thresholds based on increased data availability, the system can proactively serve analyzed data as automated response to later operator queries and even suggest new operator focus areas.

The scalar timing or scalar expectancy theory (SET) is a model of the processes that govern systems behavior controlled by time. The model posits an internal clock, and particular memory and decision processes. In Prisma analysis, SET is one of the more important models of mixed-system timing behavior, including conflicts.

Hysteresis in Prisma analysis is in general terms the observation and recording of the dependence of the state of a system on its history. Plots of a single component of the moment often form a loop or hysteresis curve, where there are different values of one variable depending on the direction of change of another variable.

Reinforcement learning (RL) is an area of machine learning concerned with how software agents ought to take actions in an environment so as to maximize some notion of cumulative reward. Reinforcement learning is one of three basic machine learning paradigms, alongside supervised learning and unsupervised learning. RL is a standard tool in the Prisma statistics library, to observe systems and predict their behavior.

All these steps occur at the same time as the system is continuously optimizing itself, while new inputs are simultaneously contributing to this optimization. Predictions made by data in the sandbox is validated continuously against real-world confirmation data.

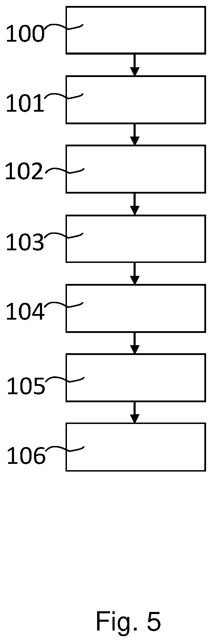

Figure 5 shows a computer implemented method for automated reconfiguration of storage management such that configuration data being provided by means of a distributed heterogeneous server infrastructure is transferred to a common storage thereby assuring data integrity, comprising the steps of performing 100 data import from the distributed heterogeneous server infrastructure, thereby extracting 101 natural text from the data; applying 102 at least one predefined constituency grammar analysis, at least one predefined dependency grammar analysis and at least one predefined ontology mapping 103 on the extracted 101 natural text for detecting 104 at least nouns, verbs and/ or ontology entities; storing 105 the detected 104 nouns in a property database, storing 105 the detected 104 verbs in a function database and storing 105 the detected 104 ontology entities in an entities database; and consolidating 106 the databases by joining the stored 105 data towards a common storage.

The present invention, namely Prisma NLP Technology, relies on natural language processing procedures that parse text and extract information, allocating each parsed chunk and extraction into assigned data structures [Causality, Groups and Organizations, Persons, Geography, Events, Physical objects, Time, Science and Technology, Concepts] that, later in the model, build the Data Fusion Objects. This is achieved by collecting 5 dimensions of information [Behaviour, Properties&Functions, Associations, Passports, Instances] for each of the 9 objects in Prisma Technology. This document mentions and describes the basic computational workflow developed to achieve said parsing and information extraction.

Prisma Technology is a knowledge technology that extracts information from unstructured sources of text data and maps the information into Data Fusion Objects. Prisma Technology extracts chunks of natural language into [Subject-Verb-Object] triples, called causations. Prisma Technology extracts named and common entities into [Groups and Organizations, Persons, Geography, Events, Physical objects, Time, Science and Technology, Concepts]. Prisma Technology extracts descriptive information about entities into a [Properties and Functions] repository. Prisma Technology extracts descriptive information about entities into a [Behaviour] repository. Prisma Technology extracts circumstantial information about entities into a [Passport] repository. Detected entities perform and change behaviour across time and environments. Behaviour is circumstantial. The Prisma model observes this by initially mapping SVO objects into the behaviour model [actor - act - acted on]. The PoS of the verb is used to detect the grammatical tense of the action. WordNet verb domains are used to categorize the action into a general class of behaviours. Object properties are a form of information extraction that describes the attributes of Prisma entities. They are extracted from the Dependency graph of the sentence. Detected entities have a variety of functions across time and environments. Functions are universal and hard wired into the entity. The Prisma model observes this by initially mapping verb dependents (subj and dobj) from the Depency graph of the sentence to the [actor - act - acted on] model, assuming that functions need a context to be performed. WordNet verb domains are used to categorize the action into a general class of functions. Passports contain unique contextual information about each Prisma object. In this stage, causation passports are in development. Mapping other Prisma objects, named here entities, into the causation passport allows the model to resolve the issue of mentions and references within the space of information extraction. [PassportType: Direct] indicates the direct presence of the entity in the causation; [PassportType: CorefMention] indicates the referential presence of the entity through co-reference chains, based on pronouns, from the Stanford CoreNLP Mentions engine.

## Claims

1. A computer implemented method for automated reconfiguration of storage management such that configuration data being provided by means of a distributed heterogeneous server infrastructure is transferred to a common storage thereby assuring data integrity, comprising the steps of:
- performing (100) data import from the distributed heterogeneous server infrastructure, thereby extracting (101) natural text from the data;
- applying (102) at least one predefined constituency grammar analysis, at least one predefined dependency grammar analysis and at least one predefined ontology mapping (103) on the extracted (101) natural text for detecting (104) at least nouns, verbs and/ or ontology entities;
- storing (105) the detected (104) nouns in a property database, storing (105) the detected (104) verbs in a function database and storing (105) the detected (104) ontology entities in an entities database; and
- consolidating (106) the databases by joining the stored (105) data towards a common storage.

2. The method according to claim 1, **characterized in that** storing (105) data and/ or consolidating (106) the databases is performed only once for each dataset along with an optional cardinality of occurrence of the respective dataset thereby reducing required storage space.

3. The method according to claim 1 or 2, **characterized in that** extracting (101) natural text from the data is performed using natural language processing, speech recognition, image recognition, character recognition, pattern matching and/ or text analysis.

4. The method according to any one of the preceding claims, **characterized in that** applying (102) at least one predefined constituency grammar analysis comprises reading out and executing predefined constituency grammar rules and storing the identified constituency in a graph like structure.

5. The method according to any one of the preceding claims, **characterized in that** applying (102) at least one predefined dependency grammar analysis comprises reading out and executing predefined dependency rules for detecting dependencies in natural text and storing the identified dependencies in a graph like structure.

6. The method according to any one of the preceding claims, **characterized in that** applying (102) at least one predefined constituency grammar analysis, at least one predefined dependency grammar analysis and at least one predefined ontology mapping (103) comprises extracting (103) subject-verb-object triples.

7. The method according to claim 6, **characterized in that** parent subject-verb-object triples are detected on the extracted (103) subject-verb-object triples.

8. The method according to any one of claims 6 or 7, **characterized in that** ontology mapping (103) is applied on subject-verb-object triples.

9. The method according to any one of the preceding claims, **characterized in that** the detected (104) at least nouns, verbs and/ or ontology entities are only stored in the database in case of a positive word sense disambiguation and are stored in a separate data storage in case word sense disambiguation fails.

10. The method according to claim 9, **characterized in that** word frequencies and word context is analyzed on the content of the separate data storage and in case a word meaning is identified of at least a predefined threshold the disambiguated word is input in the present method performing (100) the data import.

11. The method according to any one of the preceding claims, **characterized in that** the at least nouns, verbs and/ or ontology entities are respectively stored in a separate storage, wherein respectively one storage is provided for Behavior, Properties and Functions, Passports, associations and/ or Relations.

12. The method according to any one of the preceding claims, **characterized in that** the ontology mapping is used for identifying if a Causality, Groups and Organizations, Persons, Geography, Events, Physical objects, Time references, Science and Technology and/ or Concepts can be detected.

13. A system arrangement for automated reconfiguration of storage management such that configuration data being provided by means of a distributed heterogeneous server infrastructure is transferred to a common storage thereby assuring data integrity, comprising the steps of:
- an interface unit arranged to perform (100) data import from the distributed heterogeneous server infrastructure, thereby extracting (101) natural text from the data;
- an analysis unit arranged to apply (102) at least one predefined constituency grammar analysis, at least one predefined dependency grammar analysis and at least one predefined ontology mapping on the extracted (101) natural text for extracting (103) subject-verb-object triples in the extracted (101) natural text and for detecting (104) at least nouns, verbs and/ or ontology entities;
- a further interface unit arranged to store (105) the detected (104) nouns in a property database, store (105) the detected (104) verbs in a function database and store (105) the detected (104) ontology entities in an entities database; and
- a configuration unit arranged to consolidate (106) the databases by joining the stored (105) data towards a common storage.

14. A computer program product comprising instructions to cause the arrangement of claim 13 to execute the steps of the method of any one of claims 1 to 12.

15. A computer-readable medium having stored thereon the computer program of claim 14.

## Amended claims

### Amended claims in accordance with Rule 137(2) EPC.

**1.** A computer implemented method for automated reconfiguration of storage management such that configuration data being provided by means of a distributed heterogeneous server infrastructure is transferred to a common storage thereby assuring data integrity, **characterized by** the steps of:
- performing (100) data import from the distributed heterogeneous server infrastructure, thereby extracting (101) natural text from the data;
- applying (102) at least one predefined constituency grammar analysis, at least one predefined dependency grammar analysis and at least one predefined ontology mapping (103) on the extracted (101) natural text for detecting (104) at least nouns, verbs and/ or ontology entities;
- storing (105) the detected (104) nouns in a property database, storing (105) the detected (104) verbs in a function database and storing (105) the detected (104) ontology entities in an entities database; and
- consolidating (106) the databases by joining the stored (105) data towards a common storage.

**12.** A system arrangement for automated reconfiguration of storage management such that configuration data being provided by means of a distributed heterogeneous server infrastructure is transferred to a common storage thereby assuring data integrity, **characterized by** the steps of:
- an interface unit arranged to perform (100) data import from the distributed heterogeneous server infrastructure, thereby extracting (101) natural text from the data;
- an analysis unit arranged to apply (102) at least one predefined constituency grammar analysis, at least one predefined dependency grammar analysis and at least one predefined ontology mapping on the extracted (101) natural text for extracting (103) subject-verb-object triples in the extracted (101) natural text and for detecting (104) at least nouns, verbs and/ or ontology entities;
- a further interface unit arranged to store (105) the detected (104) nouns in a property database, store (105) the detected (104) verbs in a function database and store (105) the detected (104) ontology entities in an entities database; and
- a configuration unit arranged to consolidate (106) the databases by joining the stored (105) data towards a common storage.
